# EUROPÄISCHE PATENTANMELDUNG

(11) **EP 4 793 113 A1**
(43) Veröffentlichungstag der Anmeldung: **19.08.2026**
(21) Anmeldenummer: 25157809.2
(22) Anmeldetag: 13.02.2025
(51) Int. Cl.: B60S 3/04

(54) **VORRICHTUNG UND VERFAHREN ZUR REINIGUNG EINES FAHRZEUGRADES**

(71) Anmelder: WashTec Holding GmbH, 86153 Augsburg (DE)
(72) Erfinder: Kölbl, Ulrich, 86316 Friedberg (DE); Sander, Fabian, 86836 Untermeitingen (DE)
(74) Vertreter: Meissner Bolte Partnerschaft mbB

(57) **Zusammenfassung**

Die vorliegende Erfindung betrifft eine Vorrichtung (10) zur Reinigung eines Fahrzeugrades mit einem Drehteller (12), der drehbar um eine erste Drehachse (DA_1) gelagert ist und der eine Vielzahl von Reinigungselementen (14) aufweist, und einem ersten Antriebsmotor (16) zur Erzeugung einer ersten rotatorischen Bewegung (ω_1) des Drehtellers (12) um die erste Drehachse (DA_1). Die Vorrichtung (10) umfasst ferner einen zweiten Antriebsmotor (18) zur Erzeugung einer zweiten rotatorischen Bewegung (ω_2) und eine Übertragungseinheit (20), die den zweiten Antriebsmotor (18) mit dem Drehteller (12) so koppelt, dass die zweite rotatorische Bewegung (ω_2) in eine dritte Bewegung des Drehtellers (12) umgesetzt wird, so dass sich die erste rotatorische Bewegung (ω_1) und die dritte Bewegung des Drehtellers (12) überlagern. Ferner betrifft die Erfindung ein entsprechendes Verfahren zur Reinigung eines Fahrzeugrades.

## Beschreibung

Die Erfindung betrifft eine Vorrichtung zur Reinigung eines Fahrzeugrades mit einem Drehteller, der drehbar um eine erste Drehachse gelagert ist und der eine Vielzahl von Reinigungselementen aufweist. Ferner umfasst die Vorrichtung einen ersten Antriebsmotor zur Erzeugung einer ersten rotatorischen Bewegung des Drehtellers um die erste Drehachse.

Zur gründlichen Reinigung der oft stark verschmutzten Fahrzeugräder werden in Waschanlagen speziell konstruierte Radwäscher eingesetzt. Der Aufbau der Radwäscher besteht aus mehreren Komponenten, die zusammenwirken, um eine effiziente und gründliche Reinigung zu gewährleisten.

Zentrales Element des Radwäschers sind rotierende Bürsten, die so positioniert sind, dass sie in direktem Kontakt mit den Rädern und/oder Felgen des Fahrzeugs stehen. Diese Bürsten bestehen aus robusten Materialien, die den Schmutz effektiv entfernen, ohne die Felgen zu beschädigen. Die Bürsten rotieren mit angepasster Geschwindigkeit und üben genügend Druck aus, um auch hartnäckige Verschmutzungen wie Bremsstaub, Schlamm oder Straßenschmutz zu lösen.

Aus der EP 2 287 053 A2 ist eine Vorrichtung zur Reinigung von Fahrzeugrädern bekannt, die einen um eine Zentralachse drehbaren und durch einen Antriebsmotor rotatorisch angetriebenen Drehkörper mit stirnseitig angeordneten Reinigungselementen enthält. Der Drehkörper enthält bei dieser Vorrichtung mindestens einen mit weiteren Reinigungselementen bestückten Drehteller, der durch die Drehung des Drehkörpers nicht nur um die Zentralachse, sondern über ein Getriebe auch um seine eigene Längsachse gedreht wird.

Zusätzlich können die Bürsten in einer Führung montiert sein, die sich an die Radposition anpasst. Der Antrieb der Bürsten erfolgt meist elektrisch oder hydraulisch, wobei die Bewegungen präzise gesteuert werden, um Beschädigungen am Fahrzeug zu vermeiden.

Ein weiterer wichtiger Bestandteil des Radwäschers sind Düsen, die Wasser oder Reinigungslösungen gezielt auf die Räder sprühen. Diese Düsen sind oft so angeordnet, dass sie die Bürsten unterstützen, indem sie den Schmutz aufweichen oder abspülen. Hochdruckdüsen werden auch eingesetzt, um schwer zugängliche Stellen wie die Speichenzwischenräume der Felgen zu erreichen und gröbere Verschmutzungen abzutragen.

Nachteilig bei den bekannten Lösungen ist, dass durch den jeweiligen Aufbau bzw. die Form des zu reinigenden Rades die Bürstenhaare durch die Rotation während der Bewegung umklappen können und somit ein Eindringen der Bürstenhaare in die Zwischenräume verhindert wird.

Dadurch gibt es Stellen an der Felge, wie z. B. die Speichenflanken, bei Speichenfelgen am Felgenhorn außen und an der Radnabe innen, die von der rein rotierenden Radwaschbürste nicht erreicht werden und an denen der Schmutz hängen bleibt.

Der Erfindung liegt daher die Aufgabe zugrunde, eine Vorrichtung und ein Verfahren zum Reinigen eines Fahrzeugrades anzugeben, die auf einfache Weise eine erhöhte Reinigungsqualität zur Verfügung stellt, so dass eine verbesserte Reinigung des Fahrzeugrades ermöglicht wird.

Erfindungsgemäß wird diese Aufgabe durch eine Vorrichtung mit den Merkmalen des Anspruchs 1 und ein Verfahren mit den Merkmalen des Anspruchs 11 gelöst. Vorteilhafte Weiterbildungen ergeben sich aus den abhängigen Ansprüchen.

Ein erster Aspekt der Erfindung ist eine Vorrichtung zur Reinigung eines Fahrzeugrades. Die Vorrichtung umfasst einen Drehteller, der drehbar um eine erste Drehachse gelagert ist und der eine Vielzahl von Reinigungselementen aufweist, und einen ersten Antriebsmotor zur Erzeugung einer ersten rotatorischen Bewegung des Drehtellers um die erste Drehachse. Zusätzlich weist die Vorrichtung einen zweiten Antriebsmotor zur Erzeugung einer zweiten rotatorischen Bewegung und eine Übertragungseinheit auf, die den zweiten Antriebsmotor mit dem Drehteller so koppelt, dass die zweite rotatorische Bewegung in eine dritte Bewegung des Drehtellers umgesetzt wird, so dass sich die erste rotatorische Bewegung und die dritte Bewegung des Drehtellers überlagern.

Die erste Drehachse ist eine imaginäre Gerade, um die der Drehteller rotiert. Der Drehteller führt somit eine Eigendrehung aus, bei der jeder Punkt des Drehtellers um die erste Drehachse rotiert. Diese erste Drehachse verläuft insbesondere senkrecht zur Ebene des Drehtellers und insbesondere geht sie durch dessen geometrischen Mittelpunkt.

Der geometrische Mittelpunkt des Drehtellers bezeichnet den Flächenschwerpunkt der von dem Drehteller gebildeten Fläche. Er befindet sich in Bezug auf Symmetrie oder Masseverteilung in der Mitte des Drehtellers. Der geometrische Mittelpunkt kann dabei der Schwerpunk des Drehtellers sein.

Insbesondere ist der Drehteller kreisscheibenförmig. Dabei ist der geometrische Mittelpunkt des Drehtellers der Punkt, von dem aus alle Punkte des Umfangs des Drehtellers den gleichen Abstand, nämlich den Radius, haben. Er liegt im Zentrum des Kreises.

Die zweite rotatorische Bewegung wird um eine zweite Drehachse ausgeführt, die eine imaginäre Gerade ist, um welche die Übertragungseinheit rotiert wird. Die zweite Drehachse verläuft insbesondere parallel zu der ersten Drehachse.

Die zweite rotatorische Bewegung bewirkt insbesondere, dass die erste Drehachse um eine zur ersten Drehachse versetzte Drehachse rotiert, so dass auch der Drehteller nicht nur um die erste Drehachse eine Eigendrehung ausführt, sondern sich auch eine überlagerte Bewegung des Drehtellers in radialer Richtung ergibt. Aufgrund dieser Überlagerung der ersten rotatorischen Bewegung mit der dritten Bewegung des Drehtellers, wird die Amplitude der Bewegung des Drehtellers und somit auch der Reinigungselemente in radialer Richtung vergrößert. Hierdurch wird es vorteilhafterweise möglich, Fahrzeugräder oder Felgen zu reinigen, die größer als die maximale radiale Erstreckung des Drehtellers sind. Des Weiteren führt die Überlagerung der ersten rotatorischen Bewegung mit der dritten Bewegung des Drehtellers vorteilhafterweise dazu, dass ein Umklappen der Reinigungselemente insbesondere an Kanten von Öffnungen einer Felge weitestgehend verhindert wird, so dass die Reinigungselemente schwer zugängliche Bereiche, wie beispielsweise Spalten, erreichen.

Die Bewegung des Drehtellers bzw. der Reinigungselemente erhält zusätzlich zu der rotatorischen Bewegungskomponente um die erste Drehachse noch eine anders gerichtete Bewegungskomponente durch die Übertragung der zweiten rotatorischen Bewegung. Durch diese Überlagerung variiert der durch die Reinigungselemente ausgeübte Anpressdruck und die Anpressrichtung. Durch die Variation im Anpressdruck kann auch die Reibung zwischen den Reinigungselementen und dem Fahrzeugrad erhöht werden. Diese Bewegungsüberlagerung führt außerdem dazu, dass die Reinigungselemente in verschieden Kraftrichtungen wirken können und dadurch Spalten, wie beispielsweise Zwischenräume in Speichen, oder schwerzugängliche Bereiche, wie beispielsweise Felgenflanken, des Fahrzeugrades besser erreichen können. Es wird insbesondere nicht nur eine tangentiale Reibkraft der Reinigungselemente durch die erste rotatorische Bewegung erzeugt, sondern es ergeben sich auch Reibkräfte, die von der tangentialen Richtung abweichenden, und zwar insbesondere Kräfte in einer zu einer Ebene des Drehtellers parallelen Richtung ausgeübt werden. Der Drehteller kann in diesem Fall die Bezugsebene definieren. Diese Überlagerung mit Reibungskräften in verschiedenen Richtungen erhöht die Waschqualität und verbessert die Reinigung von Fahrzeugrädern.

Bei der Vorrichtung zur Reinigung eines Fahrzeugrades ist es vorteilhaft, wenn diese eine Steuereinheit aufweist, die ausgelegt ist, den ersten Antriebsmotor und den zweiten Antriebsmotor unabhängig voneinander zu steuern. Die Steuereinheit kann dabei auch zwei separate Teileinheiten umfassen, die jeweils einen der Antriebsmotoren steuert.

Dabei können in der Steuereinheit verschiedene Waschprogramme hinterlegt sein, die entweder manuell durch den Bediener oder automatisch aufgrund einer sensorischen Erkennung ausgewählt und ausgeführt werden.

Diese unabhängige Steuerung ermöglicht es zum Beispiel, die Frequenz bzw. die Überlagerung der ersten rotatorischen Bewegung und der dritten rotatorischen Bewegung an den Verschmutzungsgrad oder die Größe des jeweiligen Fahrzeugrades anzupassen, um so ein optimiertes Ergebnis der Reinigung zu erhalten.

Außerdem ist es durch die unabhängige Ansteuerung der Antriebsmotoren vorteilhafterweise möglich, eine optimale Überlagerung der ersten rotatorischen Bewegung mit der dritten Bewegung zu erreichen.

Besonders vorteilhaft ist es bei der Vorrichtung zur Reinigung eines Fahrzeugrades, wenn die Steuereinheit den ersten Antriebsmotor und den zweiten Antriebsmotor so steuert, dass die Winkelgeschwindigkeit der ersten rotatorischen Bewegung und die Winkelgeschwindigkeit der zweiten rotatorischen Bewegung kein gemeinsames Vielfaches haben.

Dies erzeugt eine Überlagerung von Schwingungen unterschiedlicher Frequenzen. Dadurch wird eine unregelmäßige, aperiodische oder komplexe Bewegung erzeugt, welche dazu führt, dass die Reinigungselemente auf die Bereiche des Fahrzeugrades aus verschiedenen Richtungen wirken. Diese Art der Bewegung garantiert nun, dass die einzelnen Reinigungselemente des Drehtellers pro Periode immer andere Bereiche des Fahrzeugrades reinigen und so möglichst viele der schwer erreichbaren bzw. zugänglichen Bereiche des Fahrzeugrades erreichen.

Bei der Vorrichtung zum Reinigen kann es vorteilhaft sein, dass die Übertragungseinheit ein Übertragungselement aufweist, welches ausgelegt, ist die zweite rotatorischen Bewegung des zweiten Antriebsmotors als dritte Bewegung auf die erste Drehachse des Drehtellers zu übertragen.

Das Übertragungselement ermöglicht vorteilhafterweise eine einfache Anbindung an den zweiten Antriebsmotor und ermöglicht es somit, die zweite rotatorische Bewegung einfacher abzugreifen, um diese in die dritte Bewegung, insbesondere eine Drehbewegung, die sich von der ersten rotatorischen Bewegung unterscheidet, umzuwandeln.

In einer weiteren Ausgestaltung weist die Übertragungseinheit der Vorrichtung zur Reinigung eines Fahrzeugrades eine erste Pleuelkurbel und eine zweite Pleuelkurbel auf. Dabei sind die erste Pleuelkurbel und die zweite Pleuelkurbel jeweils mit dem Drehteller gekoppelt, wobei die erste Pleuelkurbel mit dem zweiten Antriebsmotor gekoppelt ist und wobei die erste und die zweite Pleuelkurbel über einen Steg, insbesondere einen Befestigungssteg, miteinander gekoppelt sind. Demnach können die Pleuelkurbeln in den Lagern des Stegs befestigt sein. Der Steg bzw. der Befestigungssteg können dabei ortsfest sein und als Fixpunkt dienen.

In einem weiteren Ausführungsbeispiel wird eine dritte Pleuelkurbel verwendet. In diesem Fall kann vorteilhafterweise eine Ebene festgelegt werden.

Als Pleuelkurbel wird vorliegend eine mechanische Anordnung verstanden, die aus einer Kurbel und einem Pleuel besteht. Das Pleuel der jeweiligen Pleuelkurbel ist dabei parallel versetzt mit der Kurbel verbunden.

Bei einem Ausführungsbeispiel wird die Kurbel der ersten Pleuelkurbel mit dem zweiten Antriebsmotor rotatorisch angetrieben. Die Kurbel der zweiten Pleuelkurbel ist wiederum über den Steg mit der ersten Pleuelkurbel gekoppelt, so dass die Rotation übertragen wird.

Demnach vollzieht die erste Pleuelkurbel die zweite rotatorische Bewegung, so dass die zweite rotatorische Bewegung über den Steg, insbesondere den Befestigungssteg, an die zweite Pleuelkurbel übertragen wird. Der jeweilige Pleuel der Pleuelkurbeln kann mit dem Übertragungselement verbunden sein. Wenn sich die Kurbel der jeweiligen Pleuelkurbel dreht, führt das Pleuel eine Kreisbewegung, die dritte Bewegung, um eine dritte Drehachse aus. Durch die Überlagerung der ersten rotatorischen Bewegung des Drehtellers mit der dritten Bewegung wird die Reinigung des Fahrzeugrades optimiert.

Die dritte Bewegung führt dazu, dass der Drehteller bzw. die Reinigungselemente eine Kreisbewegung, insbesondere eine kreisende Bewegung, ausführen, deren jeweilige Drehachsen im Wesentlichen sich von der ersten Drehachse des Drehtellers unterscheiden und von diesem beabstandet ist.

Die erste rotatorische Bewegung ist eine Eigendrehung des Drehtellers um die erste Drehachse. Die dritte Bewegung ist insbesondere eine kreisende Bewegung des Drehtellers, bei der sich die Ausrichtung des Drehtellers in seiner Ebene nicht verändert, d. h. der Drehteller keine Eigendrehung ausführt. Betrachtet man nur die dritte Bewegung dreht sich jeder Punkt auf dem Drehteller um eine andere Achse.

Des Weiteren kann es bei der Vorrichtung vorteilhaft sein, wenn die erste Pleuelkurbel und die zweite Pleuelkurbel in jeweils einem Drehlager gelagert sind, wobei das Drehlager die jeweilige Kurbel der ersten und zweiten Pleuelkurbel in einer zu den Kurbeln senkrechten Ebene stabilisiert. Insbesondere werden die Pleuelkurbeln in einer Richtung stabilisiert, die senkrecht zur Kurbel durch die Lagerstelle der Kurbel der Pleuelkurbel verläuft.

Bei dieser Ausgestaltung kann es weiterhin von Vorteil sein, wenn die erste Pleuelkurbel und die zweite Pleuelkurbel in jeweils einem Drehlager frei drehend gelagert sind. Dies ermöglicht eine optimale Übertragung der zweiten rotatorischen Bewegung.

Es ist bei der Vorrichtung zum Reinigen besonders vorteilhaft, wenn die dritte Bewegung eine periodische Drehbewegung ist, insbesondere eine periodische kreisende Bewegung. Dabei ist der Radius der dritten Bewegung insbesondere kleiner als der Radius des Drehtellers, z. B. weniger als 50%, vorzugsweise weniger als 30%, weiter vorzugsweise weniger als 20% des Radius des Drehtellers.

Der Radius der dritten Bewegung wird durch die Kurbelarmlänge bestimmt und entspricht dem Abstand zwischen Kurbel und Pleuel der beiden Pleuelkurbeln. Aufgrund der Kurbelarmlänge der jeweiligen Pleuelkurbel, kann die Reinigung mit einem vergleichsweisen geringen Bauraum der Vorrichtung ausgeführt werden. Dabei ist der Abstand der beiden Pleuelkurbel so zu wählen, dass diese sich nicht berühren.

Durch diese Bewegung mit einem kleineren Radius und den versetzten Drehachsen können die Zwischenräume der Felgen eines Fahrzeugrades besser erreicht und gereinigt werden.

Diese Art der Bewegung lässt sich besonders einfach umsetzen, da dann die zweite rotatorische Bewegung auch gleichförmig sein kann.

Für die Vergrößerung der Amplitude und damit der Möglichkeit, größere Fahrzeugräder mittels der Vorrichtung zu reinigen, kann es vorteilhaft sein, wenn die maximale durch die dritte Bewegung erzeugte radiale Auslenkung des Drehtellers die maximale radiale Erstreckung des Drehtellers um mindestens 3%, vorzugsweise mindestens 5%, weiter vorzugsweise mindestens 10%, vergrößert.

Dabei entspricht die maximale radiale Erstreckung des Drehtellers, wenn dieser z.B. nicht kreisscheibenförmig ist, dem radialen Abstand der ersten Drehachse von dem radial äußersten Punkt des Drehtellers. Für den bevorzugten Fall, dass der Drehteller kreisscheibenförmig ist, entspricht die maximale radiale Erstreckung dem maximalen Radius des Drehtellers.

Für die effiziente Überlagerung der zweiten rotatorischen Bewegung einerseits und der ersten rotatorischen Bewegung andererseits, um die Reinigung weiter zu verbessern, ist es vorteilhaft, wenn die ersten rotatorischen Bewegung des Drehtellers und die dritte Bewegung des Drehtellers in derselben Bewegungsebene ausgeführt werden, wobei die Bewegungsebene senkrecht auf der ersten Drehachse des Drehtellers steht.

Um die Effizienz und das Ergebnis der Reinigung mittels der Vorrichtung zur Reinigung weiterhin zu verbessern, kann der erste Antriebsmotor ausgelegt sein, im Pendelbetrieb betrieben zu werden. Dabei kann die Pendelbewegung in einem Winkelbereich von +/- 5° bis +/- 50°, vorzugsweise +/- 5° bis +/- 35°, weiter vorzugsweise +/- 5° bis +/- 20°, ausgeführt werden. Zusätzlich oder alternativ kann es von Vorteil sein, wenn auch der zweite Antriebsmotor ausgelegt ist, im Pendelbetrieb betrieben zu werden.

Unter Pendelbetrieb versteht man eine Betriebsweise, bei der der jeweilige Antriebsmotor abwechselnd in entgegengesetzter Drehrichtung betrieben wird. Statt einer kontinuierlichen Drehbewegung führt der Antriebsmotor also eine hin- und hergehende oszillierende Drehbewegung aus. Die Pendelzyklen sowie die Drehzahl des Drehtellers ist dabei abhängig von der Größe des Fahrzeugrades und der Anzahl der Speichen. Denkbar ist dabei, dass die Drehzahl im Pendelbetrieb maximal 50%, vorzugsweise maximal 30%, weiter vorzugsweise maximal 20%, der Drehzahl im rotierenden Betrieb entspricht.

Bei einem Ausführungsbeispiel ist die Vorrichtung so ausgelegt, dass der erste Antriebsmotor in einer ersten Reinigungsphase eine Pendelbewegung ausführt und in einer zweiten Reinigungsphase zumindest um eine volle Umdrehung rotiert. In der zweiten Reinigungsphase kann der erste Antriebsmotor zum Beispiel eine weitere Pendelbewegung ausführen, die jedoch eine Drehung umfasst, die größer als 360° ist, oder der erste Antriebsmotor wird so betrieben, dass er zumindest in einem bestimmten Zeitintervall mit einer definierten Winkelgeschwindigkeit rotiert.

Des Weiteren ist es bei der Vorrichtung zur Reinigung vorteilhaft, wenn eine Zustelleinheit vorgesehen ist. Diese ermöglicht es z. B. nach Inbetriebnahme zumindest eines der Antriebsmotoren, insbesondere des zweiten Antriebsmotors, den Drehteller in Richtung des Fahrzeugrades zuzustellen, um in axialer Richtung eine Kraft, die sogenannte Zustellkraft, zwischen den Reinigungselementen und dem Fahrzeugrad auszuüben. Diese Zustellkraft ermöglicht das Eintauchen der Reinigungselemente in die Öffnungen des Fahrzeugrades, insbesondere in die Öffnungen einer Felge des Fahrzeugrades.

Ein zweiter Aspekt der Erfindung ist ein Verfahren zur Reinigung eines Fahrzeugrades mit einer Vorrichtung gemäß dem ersten Aspekt der Erfindung. Das Verfahren weist die folgenden Schritte auf:
- Erzeugen der zweiten rotatorischen Bewegung, insbesondere der ersten Pleuelkurbel, mittels des zweiten Antriebsmotors, wobei der zweite Antriebsmotor und der Drehteller mittels der Übertragungseinheit so gekoppelt sind, dass die zweite rotatorische Bewegung in die dritte Bewegung des Drehtellers umgesetzt wird;
- Zustellen der Vorrichtung in axialer Richtung eines zu reinigenden Fahrzeugrades mittels einer Zustelleinheit, so dass die Reinigungselemente in axialer Richtung eine Zustellkraft auf das Fahrzeugrad ausüben;
- Erzeugen der ersten rotatorischen Bewegung des Drehtellers um die erste Drehachse mittels des ersten Antriebsmotors.

Wenn die erste und die zweite rotatorische Bewegung ausgeführt wird, überlagern sich die erste rotatorische Bewegung und die dritte Bewegung des Drehtellers, so dass die Amplitude der Bewegung des Drehtellers bzw. der Reinigungselemente vergrößert wird. Dies führt zu einer verbesserten Reinigung der Felgen, da die Reinigungselemente aufgrund des insbesondere kleineren Radius der dritten Bewegung in die schwer zugänglichen Bereiche der Felge gelangen.

Die Verfahrensschritte können in verschiedenen Abfolgen ausgeführt werden.

Dabei kann es bei dem Verfahren vorteilhaft sein, wenn die zweite rotatorische Bewegung vor dem Zustellen der Vorrichtung erzeugt wird und die erste rotatorische Bewegung nach dem Zustellen der Vorrichtung erzeugt wird.

Dabei wird während des Zustellens insbesondere die dritte Bewegung ausgeführt, so dass die Reinigungselemente in die schwer zugänglichen Bereiche der Felgen, beispielsweise Spalten oder zwischen die Speichen, bewegt werden.

Wird die erste rotatorische Bewegung bevorzugt zusätzlich zu der zweiten rotatorischen Bewegung erzeugt, so dass sich die dritte Bewegung mit der ersten rotatorischen Bewegung überlagert, und üben die Reinigungselemente gleichzeitig in axialer Richtung eine Zustellkraft auf das Fahrzeugrad aus, führt die überlagerte Bewegung der Reinigungselemente vorteilhafterweise dazu, dass sich der Drehteller weiter in Richtung des Fahrzeugrades bewegt und die Reinigungselemente noch tiefer in schwer zugänglichen Bereiche der Felgen, beispielsweise Spalten oder zwischen die Speichen, gelangen. Diese Überlagerung ermöglicht ein optimiertes Reinigen des Fahrzeugrades, da ein Umklappen der Reinigungselemente verhindert wird, so dass die Reinigungselemente die Zwischenräume leichter erreichen.

Ferner kann es bei dem Verfahren von Vorteil sein, wenn der erste Antriebsmotor in einer ersten Reinigungsphase mit einer Pendelbewegung als erste rotatorische Bewegung betrieben wird, wobei die Pendelbewegung in einer Drehrichtung eine maximale Auslenkung zwischen 5° und 20° aufweist. In der ersten Reinigungsphase wird insbesondere der erste Antriebsmotor mit dieser Pendelbewegung als erste rotatorische Bewegung betrieben und der zweite Antriebsmotor wird gleichzeitig zum Erzeugen der dritten Bewegung betrieben.

Dabei beschreibt die maximale Auslenkung den maximalen Betrag des Winkels, um den der erste Antriebsmotor den Drehteller von einer Ruheposition in einer Drehrichtung abweicht, während er im Pendelbetrieb betrieben wird.

Wird diese Pendelbewegung mit der dritten Bewegung überlagert, so wird es ermöglicht, dass die Reinigungselemente weiter bzw. regelmäßig in die schwer zugänglichen Bereiche des Fahrzeugrades bewegt werden. Dies verbessert die Reinigung des Kraftfahrzeugrades.

In einer weiteren vorteilhaften Ausgestaltung des Verfahrens, kann der erste Antriebsmotor in einer zweiten Reinigungsphase mit einer Rotation um mindestens 360° als erste rotatorische Bewegung betrieben werden. Besonders vorteilhaft ist es, wenn mehrere vollständige Umdrehungen durchgeführt werden. Diese Rotation in Kombination mit der dritten Bewegung ermöglicht es wiederum die sonst schwer erreichbaren Außenbereiche des Fahrzeugrades zu erreichen.

Bei dem Verfahren ist es möglich, dass sich die erste Reinigungsphase und die zweite Reinigungsphase abwechseln.

Des Weiteren kann es für das Verfahren vorteilhaft sein, wenn der zweite Antriebsmotor eine kreisende Bewegung des Drehtellers mit 180 bis 220 Umdrehungen/min, vorzugsweise 190 bis 220 Umdrehungen/min, weiter vorzugsweise 200 bis 210 Umdrehungen/min, erzeugt und der erste Antriebsmotor eine Rotation oder Oszillation des Drehtellers mit 120 bis 240 Grad/sec, vorzugsweise 150 bis 210 Grad/sec, weiter vorzugsweise 170 bis 180 Grad/sec, erzeugt.

Durch die hohe Frequenz der zweiten rotatorischen Bewegung führen die Reinigungselemente kleine und schnelle kreisende Bewegungen aus, und erreichen dadurch die Zwischenräume und Spalten sicher und schnell, und sorgen durch die kleinere Frequenz der ersten rotatorischen Bewegung eine optimierte Reinigung des Kraftfahrzeugrades.

Die Erfindung wird nun anhand von Ausführungsbeispielen im Zusammenhang mit den schematischen Zeichnungen mit weiteren Einzelheiten näher erläutert.

In diesen zeigen
- Figur 1: eine schematische Darstellung eines Ausführungsbeispiels einer Vorrichtung zur Reinigung eines Fahrzeugrades;
- Figur 2: eine schematische Darstellung des Ausführungsbeispiels der Vorrichtung in einer isometrischen Ansicht; und
- Figur 3: eine schematische Darstellung eines Verfahrens zur Reinigung eines Fahrzeugrades mit einer Vorrichtung gemäß Figur 1 oder 2.

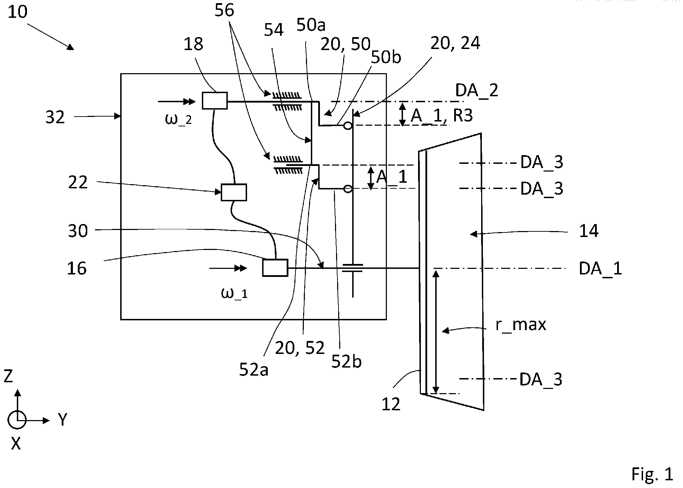

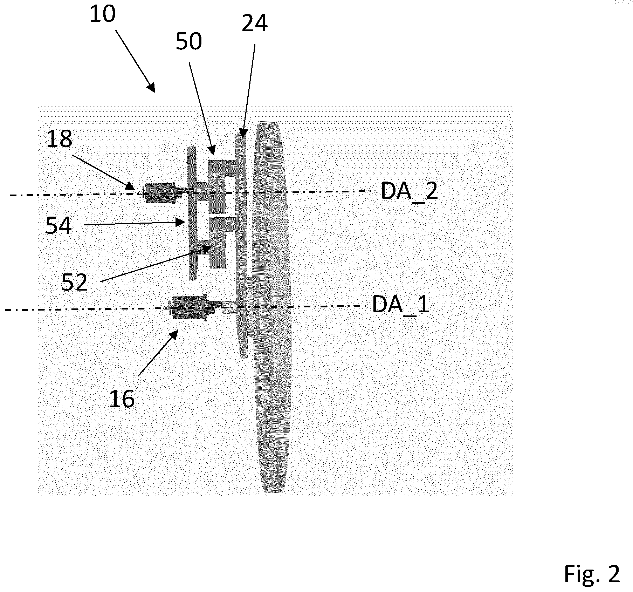

Die Fig. 1 und 2 zeigen eine Vorrichtung 10 zur Reinigung eines Fahrzeugrades gemäß dem Ausführungsbeispiel in jeweils einer anderen Ansicht. Die Vorrichtung 10 weist einen ersten Antriebsmotor 16, einen zweiten Antriebsmotor 18, einen Drehteller 12 sowie eine Übertragungseinheit 20 auf. Dabei ist der Drehteller 12 drehbar um eine erste Drehachse DA_1 gelagert und weist eine Vielzahl von Reinigungselementen 14 auf, wie beispielhaft in Fig. 1 dargestellt.

Des Weiteren weist die Vorrichtung 10 eine Zustelleinheit 32 auf, mit der sie in Richtung eines Fahrzeugrades zugestellt werden kann.

Die Drehachsen DA_1 und DA_2 der beiden Antriebsmotoren 16, 18 sind beabstandet voneinander angeordnet. Dabei erzeugen die beiden Antriebsmotoren 16, 18 jeweils eine rotatorische Bewegung um diese Drehachsen DA_1 und DA_2. Der erste Antriebsmotor 16 treibt eine Welle 30 an und dient der Erzeugung einer ersten rotatorischen Bewegung ω_1 des Drehtellers 12 um die erste Drehachse DA_1 und der zweite Antriebsmotor 18 dient der Erzeugung einer zweiten rotatorischen Bewegung ω_2 um die zweite Drehachse DA_2.

Wie in Fig. 1 und 2 gezeigt, umfasst die Übertragungseinheit 20 eine Übertragungselement 24 sowie eine erste Pleuelkurbel 50 mit einer ersten Kurbel 50a und einem ersten Pleuel 50b, eine zweite Pleuelkurbel 52 mit einer Kurbel 52a und einem Pleuel 52b und einen Befestigungssteg 54. Die erste Pleuelkurbel 50 und die zweite Pleuelkurbel 52 sind jeweils mit dem Drehteller 12 gekoppelt. Hierfür ist die erste Kurbel 50a mit dem zweiten Antriebsmotor 18 gekoppelt und die erste und die zweite Kurbel 50a, 52a sind über einen Befestigungssteg 54 miteinander gekoppelt. In dem Befestigungssteg 54 sind die Kurbeln 50a und 52a frei drehend in jeweils einem Drehlager 56 gelagert. Hierdurch werden die Kurbeln 50a und 52a in einer zu den Kurbeln 50a, 52a senkrechten Ebene stabilisiert und fixiert. Die zweite Pleuelkurbel 52 wird von der angetriebenen ersten Pleuelkurbel 50 mitgenommen. Diese Bewegung wird über das dem Drehteller 12 zugewandte Ende der jeweiligen Pleuelkurbel 50, 52 auf den Drehteller 12 als dritte Bewegung übertragen.

Bei einem weiteren Ausführungsbeispiel kann noch eine dritte Pleuelkurbel verwendet werden, um eine Ebene festzulegen.

Die Übertragungseinheit 20 koppelt somit den zweiten Antriebsmotor 18 mit dem Drehteller 12 so, dass die zweite rotatorische Bewegung ω_2 in eine dritte Bewegung des Drehtellers 12 umgesetzt wird, so dass sich die erste rotatorische Bewegung ω_1 und die dritte Bewegung des Drehtellers 12 überlagern, so dass der Drehteller eine komplexe überlagerte Bewegung ausführt.

Im Betrieb versetzt der zweite Antriebsmotor 18 die erste Kurbel 50a der ersten Pleuelkurbel 50 in eine Drehung. Diese Drehung wird in eine Drehung des Pleuel 50b um die zweite Drehachse DA_2 umgesetzt. Mittels des Übertragungselements 24 und wegen der Fixierung der Kurbeln 50a, 52a führt auch das Pleuel 52b eine entsprechende Drehung aus, die wiederum auf die Welle 30 und den Drehteller 12 als dritte Bewegung übertragen wird.

Die dritte Bewegung ist eine kreisende Bewegung des Drehtellers, bei der sich die Ausrichtung des Drehtellers in seine Ebene nicht verändert, d. h. der Drehteller keine Eigendrehung ausführt. Jeder Punkt auf dem Drehteller dreht sich dabei um eine andere Achse, die im folgenden auch als dritte Achsen DA_3 bezeichnet wird.

Versetzt der erste Antriebsmotor auch die Welle 30 in eine erste rotatorische Bewegung ω_1, d. h. eine Eigendrehung des Drehtellers 12 um die erste Drehachse DA_1, überlagert sich diese Bewegung ω_1 mit der dritten Bewegung, so dass jeder Punkt auf dem Drehteller 12 und entsprechend die daran befestigten Reinigungselemente 14 eine komplexe Bewegung ausführen.

Bei dem Ausführungsbeispiel der Vorrichtung 10 ist die dritte Bewegung somit eine periodische Drehbewegung, insbesondere eine periodische kreisende Bewegung. Der Radius R3 der dritten Bewegung ist dabei weniger als 50% des Radius R des Drehtellers 12. Der Radius R3 der dritten Bewegung ergibt sich dabei aus dem Abstand A_1 der Kurbel 50a, 52a und dem Pleuel 50a, 50b der jeweiligen Pleuelkurbel 50, 52. Die dritte Bewegung führt zu einer radialen Amplitude der Bewegung des Drehtellers 12, welche den wirksamen Radius des Drehtellers 12 erhöht. Dies wiederum führt außerdem dazu, dass ein an dem Drehteller 12 befestigtes Reinigungselement 14 eine komplexe Bewegung ausführt, so dass die einzelnen Reinigungselemente 14 des Drehtellers 12 immer andere Bereiche des Fahrzeugrades, insbesondere auch aus immer anderen Richtungen, reinigen und so möglichst viele der schwer erreichbaren bzw. zugänglichen Bereiche des Fahrzeugrades erreichen.

Aufgrund der dritten Bewegung vergrößert sich der effektive Radius des Drehtellers um den Radius R3. Besonders gute Reinigungseffekte stellen sich ein, wenn die maximale radiale Auslenkung die maximale radiale Erstreckung r_max des Drehtellers 12 um mindestens 3%, vorzugsweise mindestens 5%, weiter vorzugsweise mindestens 10%, vergrößert.

Die erste rotatorische Bewegung ω_1 des Drehtellers 12 und die dritte Bewegung des Drehtellers 12 werden in derselben Bewegungsebene ausgeführt, wobei die Bewegungsebene senkrecht auf der ersten Drehachse DA_1 des Drehtellers 12 steht.

Bei der durch die Antriebsmotoren 16, 18 erzeugten Bewegung der Reinigungselemente 14 wirken diese in verschiedene Kraftrichtungen. Hierdurch werden schwer zugängliche Bereiche, wie Zwischenräume der Speichen, der Fahrzeugräder erreicht. Gleichzeitig wird durch die überlagerte Bewegung auch der Einfluss auf die Reibung zwischen den Reinigungselementen 14 und dem Fahrzeugrad häufig verändert. Beide Effekte führen zu einer verbesserten Reinigung des Fahrzeugrades.

Außerdem knicken die Reinigungselemente 14 nicht mehr wie bei einer nur rotierenden Bewegung an Kanten von Öffnungen einer Felge um, sondern tauchen in die Öffnungen ein, so dass sie schwer zugängliche Bereiche, wie die Speichenflanken oder Speichenzwischenräume erreichen, wenn sie in axialer Richtung des Fahrzeugrades zugestellt werden, d. h. eine axiale Zustellkraft auf die Reinigungselemente 14 wirkt.

Die Vorrichtung 10 weist ferner eine Steuereinheit 22 auf, welche mit dem ersten Antriebsmotor 16 und dem zweiten Antriebsmotor 18 datenübertragend verbunden ist. Zusätzlich ist die Steuereinheit 22 ausgelegt, den ersten Antriebsmotor 16 und den zweiten Antriebsmotor 18 unabhängig voneinander zu steuern.

Dabei steuert die Steuereinheit 22 den ersten Antriebsmotor 16 und den zweiten Antriebsmotor 18 so, dass die Winkelgeschwindigkeit der ersten rotatorischen Bewegung ω_1 und die Winkelgeschwindigkeit der zweiten rotatorischen Bewegung ω_2 kein gemeinsames Vielfaches haben.

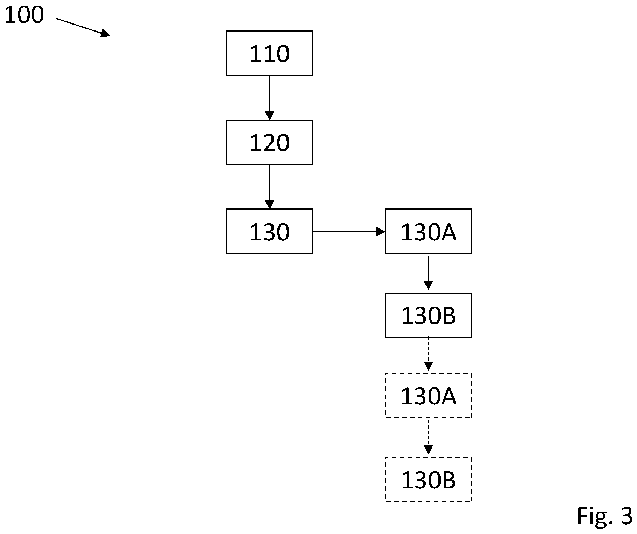

Mit Bezug zu Figur 3 wird ein Ausführungsbeispiel des erfindungsgemäßen Verfahrens 100 zur Reinigung eines Fahrzeugrades mit einer Vorrichtung 10 gemäß Figur 1 oder 2 beschrieben:
Im Schritt 110 wird die zweite rotatorische Bewegung ω_2 mittels des zweiten Antriebsmotors 18 erzeugt. Da der zweite Antriebsmotor 18 und der Drehteller 12 mittels der Übertragungseinheit 20 wie vorstehend beschrieben gekoppelt sind, wird die zweite rotatorische Bewegung ω_2 in die dritte Bewegung umgesetzt. Der Drehteller 12 führt eine Drehbewegung mit dem Radius R3 aus, ohne jedoch seine Ausrichtung zu verändern. Beispielsweise bleibt der oberste Punkt des Drehtellers 12 auch während der dritten Bewegung des Drehtellers 12 der oberste Punkt und ein Punkt auf der rechten Seite des Drehtellers 12 bleibt auch während der dritten Bewegung des Drehtellers 12 auf der rechten Seite.

Im Schritt 120 wird die Vorrichtung 10 dann in axialer Richtung eines zu reinigenden Fahrzeugrades mittels einer Zustelleinheit 32 bewegt, bis die Reinigungselemente 14 gegen das Fahrzeugrad drücken, d. h. in axialer Richtung eine Zustellkraft auf das Fahrzeugrad ausüben.

Im Schritt 130 wird die erste rotatorische Bewegung ω_1 des Drehtellers 12 um die erste Drehachse DA_1 mittels des ersten Antriebsmotors 16 erzeugt. In einer ersten Reinigungsphase 130A ist die erste rotatorische Bewegung ω_1 eine Pendelbewegung mit einem Drehwinkel von +/- 10°. Dabei wird der zweite Antriebsmotor 18 mit einer Frequenz von 15 bis 30 Hz und der erste Antriebsmotor 18 mit einer Frequenz von 5 bis 15 Hz betrieben.

Durch die Pendelbewegung um die erste Drehachse DA_1, die überlagerte dritte Bewegung und die weiterhin wirkende Zustellkraft dringen die Reinigungselemente 14 weiter in Speichenflanken oder Speichenzwischenräume ein. Insbesondere knicken sie dabei wegen des relativ geringen Pendelwinkels nicht vor dem Eindringen ab. Gleichzeitig führen die Reinigungselemente 14 eine komplexe Bewegung aus, so dass Speichenflanken und Speichenzwischenräume durch Krafteinwirkung aus verschiedenen Richtungen gereinigt werden.

Nach dem Ausführen der ersten Reinigungsphase 130A wird der erste Antriebsmotor 16 in einer zweiten Reinigungsphase 130B mit einer Rotation um mindestens 360° als erste rotatorische Bewegung ω_1 betrieben. Beispielsweise kann er für eine Zeitintervall mit konstanter Winkelgeschwindigkeit rotieren, um die radial äußeren Bereiche der Felge und die Außenfläche der Speichen zu reinigen.

Optional können die Reinigungsphasen 130A und 130B mehrfach alternierend betrieben werden.

Abschließend wird die Vorrichtung 10 von der Zustelleinheit 32 wieder von dem Fahrzeugrad wegbewegt und der Antrieb durch die Antriebsmotoren 16 und 18 wird beendet.

### Bezugszeichenliste

- 10: Vorrichtung
- 12: Drehteller
- 14: Reinigungselemente
- 16: erster Antriebsmotor
- 18: zweiter Antriebsmotor
- 20: Übertragungseinheit
- 22: Steuereinheit
- 24: Übertragungselement
- 30: Welle
- 32: Zustelleinheit
- 50: erste Pleuelkurbel
- 50a: erste Kurbel
- 50b: erstes Pleuel
- 52: zweite Pleuelkurbel
- 52a: zweite Kurbel
- 52b: zweites Pleuel
- 54: Befestigungssteg
- 56: Drehlager
- 100: Verfahren
- 110: Erzeugen der zweiten rotatorischen Bewegung
- 120: Zustellen der Vorrichtung
- 130: Erzeugen der ersten rotatorischen Bewegung
- 130A: erste Reinigungsphase
- 130B: zweite Reinigungsphase

- DA_1: erste Drehachse
- DA_2: zweite Drehachse
- DA_3: dritte Drehachsen
- A_1: Abstand zwischen Kurbel und Pleuel
- ω_1: erste rotatorische Bewegung
- ω_2: zweite rotatorische Bewegung
- r_max: maximalen radialen Erstreckung
- X: Längsrichtung
- R3: Radius der dritten Bewegung

## Patentansprüche

1. Vorrichtung (10) zur Reinigung eines Fahrzeugrades mit
einem Drehteller (12), der drehbar um eine erste Drehachse (DA_1) gelagert ist und der eine Vielzahl von Reinigungselementen (14) aufweist, und
einem ersten Antriebsmotor (16) zur Erzeugung einer ersten rotatorischen Bewegung (ω_1) des Drehtellers (12) um die erste Drehachse (DA_1),
**gekennzeichnet durch**
einen zweiten Antriebsmotor (18) zur Erzeugung einer zweiten rotatorischen Bewegung (ω_2) und
eine Übertragungseinheit (20), die den zweiten Antriebsmotor (18) mit dem Drehteller (12) so koppelt, dass die zweite rotatorische Bewegung (ω_2) in eine dritte Bewegung des Drehtellers (12) umgesetzt wird, so dass sich die erste rotatorische Bewegung (ω_1) und die dritte Bewegung des Drehtellers (12) überlagern.

2. Vorrichtung (10) nach Anspruch 1,
**dadurch gekennzeichnet, dass**
die Vorrichtung (10) eine Steuereinheit (22) aufweist, die ausgelegt ist, den ersten Antriebsmotor (16) und den zweiten Antriebsmotor (18) unabhängig voneinander zu steuern.

3. Vorrichtung (10) nach Anspruch 2,
**dadurch gekennzeichnet, dass**
die Steuereinheit (22) den ersten Antriebsmotor (16) und den zweiten Antriebsmotor (18) so steuert, dass die Winkelgeschwindigkeit der ersten rotatorischen Bewegung (ω_1) und die Winkelgeschwindigkeit der zweiten rotatorischen Bewegung (ω_2) kein gemeinsames Vielfaches haben.

4. Vorrichtung (10) nach einem der vorhergehenden Ansprüche,
**dadurch gekennzeichnet, dass**
die Übertragungseinheit (20) ein Übertragungselement (24) aufweist, welches ausgelegt ist die zweite rotatorischen Bewegung (ω_2) des zweiten Antriebsmotors (18) als dritte Bewegung auf die erste Drehachse (DA_1) des Drehtellers (12) zu übertragen.

5. Vorrichtung (10) nach einem der Ansprüche 1 bis 4,
**dadurch gekennzeichnet, dass**
die Übertragungseinheit (20) eine erste Pleuelkurbel (50) und mindestens eine zweite Pleuelkurbel (52) aufweist, die jeweils mit dem Drehteller (12) gekoppelt sind, wobei die erste Pleuelkurbel (50) mit dem zweiten Antriebsmotor (18) gekoppelt ist und wobei die erste und die zweite Pleuelkurbel (50, 52) über einen Steg (54) miteinander gekoppelt sind.

6. Vorrichtung (10) nach Anspruch 5,
**dadurch gekennzeichnet, dass**
die erste Pleuelkurbel (50) und die zweite Pleuelkurbel (52) in jeweils einem Drehlager (56) gelagert sind, wobei das Drehlager (56) die erste und zweite Pleuelkurbel (50, 52) stabilisiert.

7. Vorrichtung (10) nach einem der vorhergehenden Ansprüche,
**dadurch gekennzeichnet, dass**
die dritte Bewegung eine kreisende Bewegung ist, wobei der Radius der dritten Bewegung weniger als 50%, vorzugsweise weniger als 30%, weiter vorzugsweise weniger als 20% des Radius des Drehtellers (12) ist.

8. Vorrichtung (10) nach einem der vorhergehenden Ansprüche,
**dadurch gekennzeichnet, dass**
sich die maximale durch die dritte Bewegung (v) erzeugte radiale Auslenkung des Drehtellers (12) die maximale radiale Erstreckung des Drehtellers (12) um mindestens 3%, vorzugsweise mindestens 5%, weiter vorzugsweise mindestens 10%, vergrößert.

9. Vorrichtung (10) nach einem der vorhergehenden Ansprüche,
**dadurch gekennzeichnet, dass**
die erste rotatorische Bewegung (ω_1) des Drehtellers (12) und die dritte Bewegung des Drehtellers (12) in derselben Bewegungsebene ausgeführt werden, wobei die Bewegungsebene senkrecht auf der ersten Drehachse (DA_1) des Drehtellers (12) steht.

10. Vorrichtung (10) nach einem der vorhergehenden Ansprüche,
**dadurch gekennzeichnet, dass**
der erste Antriebsmotor (16) ausgelegt ist, im Pendelbetrieb betrieben zu werden.

11. Verfahren zur Reinigung eines Fahrzeugrades mit einer Vorrichtung gemäß einem der vorhergehenden Ansprüche, aufweisend die folgenden Schritte:
- Erzeugen der zweiten rotatorischen Bewegung (ω_2) mittels des zweiten Antriebsmotors (18), wobei der zweite Antriebsmotor (18) und der Drehteller (12) mittels der Übertragungseinheit (20) so gekoppelt sind, dass die zweite rotatorische Bewegung (ω_2) in die dritte Bewegung des Drehtellers (12) umgesetzt wird;
- Zustellen der Vorrichtung (10) in axialer Richtung eines zu reinigenden Fahrzeugrads mittels einer Zustelleinheit, so dass die Reinigungselemente (14) in axialer Richtung eine Zustellkraft auf das Fahrzeugrad ausüben;
- Erzeugen der ersten rotatorischen Bewegung (ω_1) des Drehtellers (12) um die erste Drehachse (DA_1) mittels des ersten Antriebsmotors (16).

12. Verfahren nach Anspruch 11,
**dadurch gekennzeichnet, dass**
die zweite rotatorische Bewegung vor dem Zustellen der Vorrichtung erzeugt wird und dass
die erste rotatorische Bewegung nach dem Zustellen der Vorrichtung erzeugt wird.

13. Verfahren nach Anspruch 11 oder 12,
**dadurch gekennzeichnet, dass**
der erste Antriebsmotor (16) in einer ersten Reinigungsphase mit einer Pendelbewegung (ω_1a) als erste rotatorische Bewegung (ω_1) betrieben wird, wobei die Pendelbewegung (ω_1a) eine maximale Auslenkung zwischen 5° und 20° aufweist.

14. Verfahren nach Anspruch 11 bis 13,
**dadurch gekennzeichnet, dass**
der erste Antriebsmotor (16) in einer zweiten Reinigungsphase mit einer Rotation um mindestens 360° als erste rotatorische Bewegung (ω_1) betrieben wird.

15. Verfahren nach einem der Ansprüche 11 bis 14,
**dadurch gekennzeichnet, dass**
der zweite Antriebsmotor (18) eine kreisende Bewegung des Drehtellers (12) mit 180 bis 220 Umdrehungen/min erzeugt und dass der erste Antriebsmotor (16) eine Rotation oder Oszillation des Drehtellers (12) mit 120 bis 240 Grad/sec erzeugt.
